# EUROPÄISCHE PATENTSCHRIFT

(11) **EP 2 715 835 B1**
(45) Veröffentlichungstag und Bekanntmachung des Hinweises auf die Patenterteilung: **14.12.2016**
(21) Anmeldenummer: 12720417.0
(22) Anmeldetag: 04.05.2012
(51) Int. Cl.: H01M 2/10, H01M 10/04, B60L 11/18

(54) **ENERGIESPEICHERMODUL AUS MEHREREN INSBESONDERE PRISMATISCHEN SPEICHERZELLEN UND VERFAHREN ZUR HERSTELLUNG EINES ENERGIESPEICHERMODULS SOWIE VERFAHREN ZUR HERSTELLUNG EINER ENDPLATTE FÜR EIN ENERGIESPEICHERMODUL**
ENERGY STORAGE MODULE COMPRISING A PLURALITY OF, IN PARTICULAR, PRISMATIC STORAGE CELLS, AND METHOD FOR PRODUCING AN ENERGY STORAGE MODULE, AND ALSO METHOD FOR PRODUCING AN END PLATE FOR AN ENERGY STORAGE MODULE
MODULE ACCUMULATEUR D'ÉNERGIE CONSTITUÉ DE PLUSIEURS ÉLÉMENTS D'ACCUMULATEUR NOTAMMENT EN FORME DE PRISME, PROCÉDÉ DE PRODUCTION D'UN MODULE ACCUMULATEUR D'ÉNERGIE ET PROCÉDÉ DE PRODUCTION D'UNE PLAQUE D'EXTRÉMITÉ POUR UN MODULE ACCUMULATEUR D'ÉNERGIE

(30) Priorität: 27.05.2011 DE 102011076575
(43) Veröffentlichungstag der Anmeldung: 09.04.2014
(73) Patentinhaber: Bayerische Motoren Werke Aktiengesellschaft, 80809 München (DE)
(72) Erfinder: GOESMANN, Hubertus, 89564 Auernheim (DE)
(86) Internationale Anmeldenummer: PCT/EP2012/001909
(87) Internationale Veröffentlichungsnummer: WO 2012/163460

(56) Entgegenhaltungen:
- EP-A2- 0 264 073
- WO-A2-2006/024421
- JP-A- 2002 042 763
- JP-A- 2004 235 110
- JP-A- 2008 124 033
- US-A1- 2010 136 405
- US-A1- 2010 190 049

## Beschreibung

Die vorliegende Erfindung betrifft ein Energiespeichermodul gemäß dem Oberbegriff des Patentanspruches 1 sowie Verfahren zur Herstellung einer Endplatte gemäß den Merkmalen der Patentansprüche 8 bis 11 sowie ein Verfahren zur Herstellung eines Energiespeichermoduls gemäß den Merkmalen des Patentanspruches 12.

Ein Energiespeichermodul gemäß dem Oberbegriff des Patentanspruches 1 ist aus der JP 2008 124 033 A bekannt. Zum technischen Hintergrund der vorliegenden Erfindung zählen die JP 2004 235110 A, US 2010/136405 A1, EP 263 073 A2, US 2010/190049 A1, JP 2002 042763 A sowie die WO 2006/024421 A2.

In einer üblicherweise als Batterie bezeichneten Vorrichtung zur Spannungsversorgung eines Kraftfahrzeugs kommt meist eine Mehrzahl an Energiespeichermodulen zum Antrieb des Fahrzeugs, beispielsweise von Elektrofahrzeugen oder Hybridfahrzeugen, zum Einsatz. Ein jeweiliges Energiespeichermodul besteht dabei typischerweise aus mehreren gestapelten prismatischen Speicherzellen. Die einzelnen Speicherzellen enthalten elektrochemische Zellen der Batterie. Der Stapel aus den einzelnen Speicherzellen wird zumeist über eine Endplatte (auch Druckplatte genannt) und Zuganker zu dem Energiespeichermodul mechanisch verspannt. Die Endplatten und Zuganker dienen neben der mechanischen Fixierung der Module zueinander insbesondere dazu, einer Verformung durch Änderung bzw. Erhöhung des Gasinnendrucks während des Betriebs der im Inneren der Module angeordneten elektrochemischen Zellen des Speichermoduls, entgegenzuwirken.

Die Endplatten und Zuganker der herkömmlichen Energiespeichermodule werden üblicherweise durch Strangpressverfahren aus Stahl oder Aluminium hergestellt. Die Herstellung solcher so genannter Strangpressprofile, ist dabei mit einem hohen fertigungstechnischen Aufwand und daraus resultierenden hohen Kosten, verbunden. Strangpressprofile für Energiespeichermodule lassen sich daher im großtechnischen Maßstab nicht kostengünstig produzieren. Herkömmliche Strangpressprofile für Energiespeichermodule haben ferner den Nachteil, dass sie aufgrund der Werkstoffeigenschaften des verwendeten Werkstoffes ein hohes Gewicht aufweisen, was sich nachteilig auf das Gesamtgewicht des Kraftfahrzeugs auswirkt. Darüber hinaus sind die das Strangpressprofil bildenden Materialien, also in der Regel Stahl oder Aluminium, elektrisch leitend, so dass zwischen den einzelnen Speicherzellen und der Spannvorrichtung eine isolierende Schicht erforderlich ist, um elektrische Kupplungen zwischen den Speicherzellen zu verhindern. Das Vorsehen solcher isolierender Schichten ist kostenintensiv und erhöht den Fertigungsaufwand des Energiespeichermoduls und damit die Kosten für die Produktion desselben.

Es ist Aufgabe der vorliegenden Erfindung, ein kostengünstiges, stabiles Energiespeichermodul für eine Vorrichtung zur Spannungsversorgung bereitzustellen, das auf einfache Weise herstellbar ist und ein geringes Eigengewicht aufweist. Weiter ist es Aufgabe ein Energiespeichermodul bereitzustellen, das ausgebildet ist, Verformungen, die aufgrund von Druckänderungen während des Betriebs der Speicherzellen entstehen, entgegenzuwirken. Ferner ist es Aufgabe der vorliegenden Erfindung, ein Verfahren zur Herstellung eines Energiespeichermoduls sowie einer effizienten Endplatte für ein Energiespeichermodul bereitzustellen, das eines geringen fertigungstechnischen Aufwandes bedarf und das zudem eine einfache und kostengünstige Fertigung des Energiespeichermoduls erlaubt.

Die Aufgabe wird gelöst durch die Merkmalskombinationen der unabhängigen Ansprüche. Die abhängigen Ansprüche zeigen vorteilhafte Ausgestaltungen der Erfindung.

Somit wird die Aufgabe gelöst durch ein Energiespeichermodul für eine Vorrichtung zur Spannungsversorgung, insbesondere eines Kraftfahrzeugs, umfassend mehrere, insbesondere prismatischen Speicherzellen, die mindestens in einer Reihe gestapelt, hintereinander angeordnet und zwischen mindestens zwei Endplatten über mindestens ein Zugelement, insbesondere über mindestens einen Zuganker, verspannt sind, wobei zumindest eine der Endplatten eine Schichtstruktur aus mindestens drei aufeinander folgenden Schichten aufweist, wobei zwei äußere Schichten mindestens eine innere Schicht umgeben und wobei die innere Schicht eine wellenartige und/oder diffuse Struktur aufweist. Üblicherweise ist in einem Energiespeichermodul jeweils eine Endplatte an der jeweiligen Stirnseite der endständigen, gestapelten Zellen angebracht, so dass das Energiespeichermodul zwei Endplatten umfasst. Eine Endplatte kann allerdings auch aus mehreren Einzelplatten bestehen, wobei dann erfindungsgemäß wenigstens eine dieser Einzelplatten eine Schichtstruktur aus mindestens drei Schichten aufweist, wobei zwei äußere Schichten eine innere Schicht umgeben und wobei die innere Schicht eine wellenartige und/oder diffuse Struktur aufweist. Vorzugsweise weisen alle Endplatten eine Schichtstruktur aus mindestens diesen drei spezifischen Schichten auf. Der erfindungsgemäß erzielte Effekt wird somit maximiert.

Die Endplatte des erfindungsgemäßen Energiespeichermoduls weist eine Schichtstruktur auf. Diese Schichtstruktur umfasst mindestens drei Schichten, wodurch eine ausreichende Stabilität der Endplatte gegenüber Druckverformung gewährleistet wird. Weitere Schichten können vorgesehen sein. Die Schichten können aus verschiedenen Materialien gebildet sein. Geeignete Materialien können miteinander kombiniert werden.

Die Schichtstruktur des erfindungsgemäßen Energiespeichermoduls zeichnet sich dadurch aus, dass sie aus mindestens drei aufeinander folgenden Schichten besteht, wobei zwei äußere Schichten mindestens eine innere Schicht umgeben und wobei die innere Schicht eine wellenartige und/oder diffuse Struktur aufweist. Eine wellenartige und/oder diffuse Struktur im Sinne der Erfindung ist eine Struktur, die zumindest teilweise Unebenheiten, Ausbuchtungen oder Krümmungen aufweist und sich dadurch von den im Wesentlichen ebenen äußeren Schichten unterscheidet. Im einfachsten Fall ist eine wellenartige Struktur eine gleichförmige Wellenstruktur, wie beispielsweise eine Sinuswelle mit einer entsprechend ausgeprägten Amplitude. Die wellenartige Struktur kann aber auch lineare und/oder gekrümmte Bereiche in sich vereinen und beispielsweise auch eine trapezartige Struktur, aufweisen.

Eine diffuse Struktur im Sinne der Erfindung ist eine solche, in der das Material, das die diffuse Struktur bildet, im Wesentlichen unregelmäßig geformte, bzw. ungleichförmig ausgeprägte oder angeordnete Bereiche aufweist. Diffuse Bereiche entstehen beispielsweise durch anisotrope Verteilung des die innere Schicht bildenden Materials, wie es beispielsweise bei faserartigen Materialien der Fall ist. Diffuse Strukturen werden auch durch Verwendung geschäumter Materialien bereitgestellt. Geschäumte Materialien sind solche, die durch Eintrag oder Erzeugung beispielsweise eines Gases, wie Luft, Stickstoff, CO₂, Treibmitteln oder dergleichen, eine Struktur bilden, in der gasförmige Bläschen von festen Wänden aus dem geschäumten Material umgeben sind.

Die äußeren Schichten sind in der Regel planare Schichten, die jedoch auch eine gewisse Eigenstruktur, also beispielsweise Oberflächenunebenheiten, bedingt durch die Struktur des verwendeten Materials oder sogar vorteilhafterweise zur inneren Schicht weisende angebrachte Oberflächenstrukturen, aufweisen. Dies erhöht die Stabilität der Endplatte.

Das erfindungsgemäße Energiespeichermodul zeichnet sich dadurch aus, dass die Schichtstruktur aus einem Faserverbundmaterial besteht, das Fasern und eine polymere Matrix umfasst, wobei die innere Schicht eine durch Ziehen des Faserverbundwerkstoffes erzeugte diffuse und/oder wellenartige Struktur aufweist, die von zwei äußeren Schichten, bestehend aus ungezogenem Material, umgeben ist. Das Faserverbundmaterial umfasst dabei insbesondere eine thermoplastische Matrix mit Fasern oder eine duromere Matrix mit Fasern und insbesondere eine duromere Matrix mit Fasern. Die Fasern in dem Faserverbundmaterial werden durch das Matrixmaterial fixiert und stabilisiert. Derartige Faserverbundmaterialien sind in gewünschter Härte bzw. Elastizität gut verfügbar und zeichnen sich durch lediglich geringe Kosten und zudem isolierende Eigenschaften aus, wodurch in der Regel auf Isolierschichten zwischen den einzelnen Speicherzellen sowie den Speicherzellen und dem Zuganker verzichtet werden kann, was eine deutlich Vereinfachung der Herstellung und damit auch der Herstellkosten bedingt. Zudem weisen diese Materialien ein geringes Eigengewicht im Vergleich zu gängigen Strangpressprofilen auf und sind leicht mit herkömmlichen Mitteln, ohne großen technischen Aufwand, verarbeitbar, was die Produktionskosten des erfindungsgemäßen Energiespeichermoduls gering hält. Duromere Matrixmaterialien haben sich aufgrund der sehr guten und dauerhaften mechanischen und thermischen Stabilität besonders bewährt. Zur Herstellung der spezifischen Drei-Schicht-Struktur der Endplatte wird an jeweils die Oberseite und die Unterseite eines Fasermaterials, ggf. unter Zuhilfenahme einer später zu entfernenden perforierten Abdeckfolie, Vakuum angelegt, so dass das Fasermaterial gezogen wird und sich in zwei Decklagen auftrennt, die durch Faserstege miteinander verbunden sind. Die Faserstege, also die innere Schicht, sind dabei mehr oder weniger gleichmäßig voneinander beabstandet und bilden eine diffuse, teilweise wellenartige Schicht und damit eine stabile Verbindung zwischen den Decklagen, die die äußeren Schichten bilden. Diese Struktur wird durch Einspritzen von Matrixmaterial während des Anlegens des Vakuums fixiert. Eine solche Schichtstruktur aus einem Faserverbundmaterial, mit einer inneren Schicht, die eine wellenartige bzw. teilweise auch diffuse Struktur aufweist, zeichnet sich durch ein besonders geringes Eigengewicht aus, so dass das Gewicht des erfindungsgemäßen Energiespeichermoduls effektiv gesenkt wird. Solche Faserverbund materialien stellen aber auch eine ausreichende Stabilität bereit, so dass eine aus einem derartigen Material gebildete Endplatte bestens geeignet ist einer Verformung aufgrund von Druckänderungen im Inneren der Speicherzellen, entgegenzuwirken.

Ferner beschrieben wird, dass eine innere Schicht mit einer wellenartigen und/oder diffusen Struktur in unterschiedlicher Anordnung zwischen die äußeren Schichten eingebracht werden kann. Beispielsweise kann eine, eine wellenartige Struktur aufweisende, innere Schicht so zwischen zwei äußere Schichten eingebracht sein, dass die innere Schicht lediglich über die zur jeweiligen Seite ausgebuchteten oder gekrümmten Stellen oder Bereiche mit den äußeren Schichten in Kontakt steht. So weist die innere Schicht auch Bereiche bzw. Stellen auf, die nicht mit einer der äußeren Schichten in Kontakt stehen. Insbesondere im Falle von mehreren vorgesehenen inneren Schichten können solche mit wellenartiger Struktur aber auch so zwischen zwei äußere Schichten eingebracht sein, dass die wellenartigen inneren Schichten mit ihrem Wellenverlauf orthogonal zu den äußeren Schichten angeordnet sind. So stehen die inneren wellenartigen Schichten lediglich über zwei Bereiche, nämlich die eine Kante der inneren Schicht, beispielsweise den Bereich des Wellenanfangs, und die gegenüberliegende Kante der inneren Schicht, beispielsweise den Bereich des Wellenendes, mit den äußeren Schichten in Kontakt. Die Anordnung diffuser Schichten kann aufgrund der im Wesentlichen ungeordneten Struktur beliebig, also zweckmäßig, erfolgen.

Durch die Ausbildung der inneren Schicht der Endplatte mit einer wellenartigen und/oder diffusen Struktur, ist diese, und damit die gesamte Endplatte, besonders gut geeignet, den im Inneren des Energiespeichermoduls, aufgrund von Druckänderungen während des Betriebs der Speicherzellen, entstehenden Verformungen, entgegenzuwirken. Mit andere Worten nehmen die Endplatten die Verformungsenergie der Speicherzellen auf und verteilen diese gleichmäßig über die gesamte Fläche der Endplatte, so dass die äußere Wandung des Energiespeichermoduls durch die gleichförmige Belastung aufgrund der Einwirkung der Verformungsenergie, nahezu keine räumliche Veränderung erfährt und somit im Wesentlichen keine Verformung des gesamten Energiespeichermoduls eintritt. Insbesondere die innere Schicht ist aufgrund ihrer Struktur dazu vorgesehen, die Verformungsenergien aufzunehmen, wobei ferner insbesondere die äußeren Schichten einen hohen mechanischen Widerstand aufweisen, und sie damit ebenfalls der Verformung des Energiespeichermoduls entgegenwirken. Eine, eine solche Schichtstruktur umfassende Endplatte, weist gegenüber herkömmlichen Strangpressprofilen den Vorteil auf, dass die Stabilität dieser Endplatten entsprechend der Anforderungen gezielt eingestellt werden kann. Darüber hinaus wird somit eine effektive Gewichtsreduktion des Eigengewichts der Endplatte und damit des Energiespeichermoduls, erzielt. Auch ist der Fertigungsaufwand einer solchen Endplatte gering, was nicht nur die technischen und betriebswirtschaftlichen Anforderungen an die Produktion des erfindungsgemäßen Energiespeichermoduls, sondern auch die Fertigungskosten desselben und somit die Kosten des Energiespeichermoduls, senkt.

Die Endplatten des erfindungsgemäßen Energiespeichermoduls sind über mindestens ein Zugelement und insbesondere über mindestens einen Zuganker verspannt. Die Anzahl und Form der Zugelemente bzw. Zuganker richtet sich dabei nach deren individueller Gestaltung. Je nach erforderlicher Stabilität kann ein bzw. können mehrere Zugelemente/Zuganker vorgesehen werden, die die an den äußeren Speicherzellen stirnseitig angebrachten Endplatten miteinander verbinden (verspannen). Beispielhafte Zuganker können dabei aus Metall, wie beispielsweise Stahl oder Aluminium gebildet sein und weisen eine Form auf, die eine dauerhafte Verbindung und Verspannung des Speicherzellenmoduls, umfassend Speicherzellen und E ndplatten, erlaubt.

Übliche weitere Bauelemente, wie beispielsweise elektrische Anschlüsse und Isolatoren zwischen den Zellen und/oder den Speicherzellen und dem Verspannelement, können das erfindungsgemäße Energiespeichermodul komplettieren.

Ferner beschrieben, aber nicht Teil der Erfindung ist ein Energiespeichermodul, wobei die Schichten des Energiespeichermoduls aus Metall, insbesondere aus Aluminium oder Stahl und insbesondere aus Aluminium bestehen, wobei die innere Schicht eine wellenartige Struktur aufweist. Endplatten, die aus metallischen Schichten bestehen, zeichnen sich durch eine ausgezeichnete Stabilität aus, die aufgrund ihrer Werkstoffeigenschaften und insbesondere ihrer hohen mechanischen Widerstandes, effektiv einer Verformung der Speicherzellen und damit des Energiespeichermoduls, entgegenwirken. Die einzelnen metallischen Schichten können dabei auf unterschiedliche, geeignete Art und Weise miteinander verbunden sein. Beispielsweise sind die Metallschichten, also insbesondere Metallplatten oder Metallbleche, miteinander verschweißt, z.B. mittels Laserschweißen oder Punktschweißen, und/oder miteinander verschraubt und/oder miteinander verklebt. Vorzugsweise sind die Metallplatten miteinander verklebt, da dies eine sehr kostengünstige und effiziente Art der Verbindung von Metallplatten darstellt.

Bevorzugte Metalle umfassen Aluminium oder Stahl, wobei Stahl eine besonders hohe Stabilität sowohl in mechanischer, als auch chemischer Hinsicht, aufweist, während Aluminium aufgrund seines geringen Gewichtes, insbesondere für Energiespeichermodule für den Einsatz in in Leichtbauweise hergestellten Kraftfahrzeugen, geeignet ist. Wellenartige Strukturen lassen sich in der metallischen inneren Schicht beispielsweise durch einfaches Umformen, wie Biegen oder Stauchen, erzielen. Alternativ oder additiv dazu kann die wellenartige Struktur der inneren Schicht aber auch durch Aufbringen einer Prägung erzeugt werden. Metallplatten in geeigneter Form und Größe sind ebenfalls auch kostengünstig im Handel erhältlich, was die Herstellungskosten und den technischen und logistischen Aufwand der Herstellung des Energiespeichermoduls senkt.

In einer weiteren nicht erfindungsgemäßen Ausführung ist vorgesehen, dass die äußeren Schichten aus Metall, insbesondere aus Aluminium oder Stahl und insbesondere aus Aluminium bestehen, wobei die innere Schicht eine diffuse Struktur aufweist. Aluminium als Material der äußeren Schichten ist hierbei wiederum aufgrund seines geringen Eigengewichts bevorzugt. Beispielhafte innere Schichten mit diffuser Struktur sind, wie bereits ausgeführt, insbesondere aus Fasern gebildete Strukturen wie Fasermatten oder auch elastomere Partikel, die mittels eines geeigneten Matrixmaterials fixiert sind. Auch derartige Endplatten sind geeignet Verformungen aufgrund von Druckänderungen im Inneren der Speicherzellen, effektiv entgegenzuwirken und die Verformungsenergien gleichmäßig aufzunehmen bzw. abzuleiten, so dass die Ausbildung lokaler Energiemaxima, die zu ebenfalls lokalen Verformungen führen können, verhindert wird. Eine derartige Schichtstruktur zeichnet sich gegenüber herkömmlichen Strangpressprofilen und auch gegenüber rein metallbasierten Endplatten, durch ein geringeres Eigengewicht aus. Auch sind die zu verwendenden Materialien gut erhältlich und kostengünstig. Auch die Verarbeitung der jeweiligen Schichten zu einer Endplatte ist ohne großen technischen Aufwand möglich und weitestgehend automatisierbar, was die Produktionskosten des Energiespeichermoduls gering hält.

Ferner beschrieben wird, dass ist die zwischen die zwei äußeren Metallplatten eingebrachte diffuse Schicht eine schaumartige Struktur, wie beispielsweise Metallschaum, wie insbesondere Aluminiumschaum, Polyurethanschaum, Polyethylenschaum, Polypropylenschaum, Polyvinylchloridschaum, Polystyrolschaum oder geschäumtes expandiertes Polypropylen und insbesondere Polyurethanschaum. Anwendung finden aber allgemein alle schaumartigen Materialien, die der inneren Schicht eine ausreichende Stabilität vermitteln. Schaumartige Materialien sind nicht nur aufgrund des im Vergleich zu Metallen meist geringeren Gewichts des zu schäumenden Materials bevorzugt, sondern auch aufgrund der Gewichtsreduktion durch das eingebrachte oder in dem zu schäumenden Material selbst erzeugte, treibende Gas. Somit zeichnet sich das Energiespeichermodul, dessen Endplatte eine Schichtstruktur aufweist, deren innere Schicht eine von zwei äußeren Metallschichten umgebene, schaumartige Schicht ist, durch ein geringes Gewicht aus, und ist daher insbesondere für Kraftfahrzeuge in Leichtbauweise geeignet. Zudem sind geeignete schäumbare oder geschäumte Materialien leicht kostengünstig erhältlich und zudem einfach ohne großen technischen Aufwand, verarbeitbar.

Im einfachsten Fall wird eine Platte aus bereits vollständig geschäumtem und ausgehärtetem Material lediglich in gewünschter Form und Größe zugeschnitten und zwischen zwei vorgesehene Metallplatten eingebracht und vorzugsweise laminiert oder mit den Metallplatten verklebt. Ein besonders bevorzugtes schaumartiges Material ist dabei Aluminiumschaum, da es sich durch eine hervorragende mechanische wie chemische Resistenz auszeichnet und zudem kostengünstig in beliebigen Härtegraden erhältlich ist und ferner über ein geringes Eigengewicht verfügt.

Die für das erfindungsgemäß beschriebene strukturierte Faserverbundmaterial in Frage kommenden Fasern sind insbesondere ausgewählt aus Glasfasern, Kohlefasern, Mineralfasern, wie beispielsweise Basaltfasern, Pflanzenfasern, wie beispielsweise Cellulosefasern oder Sisalfasern, Keramikfasern wie beispielsweise Mullitfasern oder SiC-Fasern, Stahlfasern oder Kunststofffasern, wie beispielsweise Polypropylenfasern, Nylonfasern oder Aramidfasern oder Mischungen daraus. Die Fasern können je nach Anforderungsprofil ausgewählt werden. Insbesondere bevorzugt sind Glasfasern, da sich diese durch eine hohe Stabilität, gute Verfügbarkeit und elektrisch isolierende Eigenschaften auszeichnen. Zudem sind Glasfasern in den erforderlichen Stabilitätsgraden kostengünstig erhältlich. Dies senkt deutlich die Herstellkosten des erfindungsgemäßen Energiespeichermoduls bei sehr guter Stabilität desselben. Die Fasern können dabei als Langfasern oder Kurzfasern vorliegen, wobei Langfasern die Stabilität des Faserverbundwerkstoffes deutlich erhöhen. Die hier angeführten Fasermaterialien zeichnen sich alle durch sehr gute mechanische Stabilitäten aus und können leicht zu den oben beschriebenen Faserverbundwerkstoffen verarbeitet werden.

In einer weiteren vorteilhaften Ausführung zeichnet sich das erfindungsgemäße Energiespeichermodul dadurch aus, dass die Fasern in Form eines Gewebes, eines Gewirkes oder eines Gestrickes, insbesondere eines Gestrickes vorliegen. Solche textilen Halbzeuge lassen sich besonders leicht durch Anlegen von Vakuum an deren Ober- und Unterseite in eine Drei-Schicht-Struktur, umfassend zwei äußere im Wesentlichen ebene Deckschichten und eine wellenartige und/oder diffuse innere Schicht aus Faserstegen, aufspalten. Die äußeren Schichten bilden dabei eine überwiegend geschlossene Deckschicht, während durch das Ziehen des textilen Halbzeugs unter Vakuum, die sich bildende innere Schicht eine mehr oder weniger lose Faserstruktur von die äußeren Deckschichten verbindenden Faserstege bildet. Diese Faserstege sind mehr oder weniger gleichmäßig über die gesamte Fläche verteilt und können sowohl eine lineare als auch eine wellenartige Form aufweisen.

Darüber hinaus wird ein Verfahren zur Herstellung einer Endplatte für ein Energiespeichermodul beschrieben, das nicht Teil der vorliegenden Erfindung ist, wobei die Endplatte eine Schichtstruktur aus mindestens drei aufeinander folgenden Schichten aufweist, wobei zwei äußeren Schichten mindestens eine innere Schicht umgeben und wobei die innere Schicht eine wellenartige und/oder diffuse Struktur aufweist, wobei das Verfahren die Schritte des Bereitstellens einer Metallplatte, insbesondere einer Stahlplatte oder Aluminiumplatte, insbesondere einer Aluminiumplatte, das Verformen mindestens einer Metallplatte zu einer wellenartig geformten Metallplatte, das Einbringen der wellenartigen Metallplatte zwischen zwei weitere Metallplatten und das Verbinden der drei Metallplatten unter Bildung einer Schichtstruktur, umfasst. Das Verformen der Metallplatte kann dabei vorzugsweise durch Biegen und/oder Stauchen und/oder durch Prägen der Metallplatte ausgeführt werden. Das Befestigen der Metallplatten kann vorzugsweise ferner durch Verschweißen und/oder Verschrauben und/oder Verkleben ausgeführt werden.

Erfingdungsgemäß ist ein Verfahren zur Herstellung einer Endplatte für ein Energiespeichermodul vorgesehen, wobei die Endplatte wiederum eine Schichtstruktur aus mindestens drei aufeinander folgenden Schichten aufweist, wobei zwei äußeren Schichten mindestens eine innere Schicht umgeben und wobei die innere Schicht eine wellenartige und/oder diffuse Struktur aufweist, wobei das Verfahren die Schritte des Bereitstellens eines textilen Halbzeugs, insbesondere eines Fasergewebes, eines Fasergewirkes oder eines Fasergestrickes, insbesondere eines Fasergestrickes, wobei das textile Halbzeug insbesondere Glasfasern enthält, das Einbringen einer polymeren Matrix, insbesondere einer thermoplastischen oder duromeren Matrix, insbesondere einer duromeren Matrix in das textile Halbzeug, das Anlegen, von Vakuum an beide Flächenseiten des textilen Halbzeugs, das in Form Ziehen des textilen Halbzeugs und ggf. Härten der Endplatte umfasst. Mit anderen Worten wird an die jeweilige Ober- und Unterseite eines entsprechenden textilen Halbzeugs Vakuum über eine Vakuumiervorrichtung angelegt und somit das textile Halbzeug auseinandergezogen. Zur Stabilisierung der sich bildenden Schicht wird vorzugsweise bereits während des Anlegens von Vakuum ein Matrixmaterial, vorzugsweise ein duromeres Material, in das textile Halbzeug eingebracht. Nach Beendigung des Vakuumiervorganges hat sich zwischen den zwei äußeren, nahezu undurchlässigen, ebenen Deckschichten eine lockere, wellenartige und/oder diffuse Schicht von die Deckschichten verbrückenden Faserstegen, gebildet. Dieses Gebilde wird durch das Matrixmaterial ausreichend stabilisiert, wobei je nach verwendetem Matrixmaterial dieses noch in üblicher Weise gehärtet werden kann, beispielsweise durch Licht- oder Temperaturhärtung.

Es wird zudem ein Verfahren zur Herstellung einer Endplatte für ein Energiespeichermodul beschrieben, das nicht Teil der Erfindung ist, wobei die Endplatte eine Schichtstruktur aus mindestens drei aufeinander folgenden Schichten aufweist, wobei zwei äußeren Schichten mindestens eine innere Schicht umgeben und wobei die innere Schicht eine wellenartige und/oder diffuse Struktur aufweist, wobei das Verfahren die Schritte des Einbringens eines schaumartigen Materials zwischen zwei Metallplatten, insbesondere zwischen zwei Stahlplatten oder Aluminiumplatten und insbesondere zwischen zwei Aluminiumplatten und ggf. Härten des schaumartigen Materials, wobei das schaumartige Material insbesondere ein Aluminiumschaum ist, umfasst. Mit anderen Worten sieht das Verfahren vor, dass zwischen zwei Metallplatten ein bereits vollständig geschäumtes und ausgehärtetes, in entsprechender Form zugeschnittenes, schaumartiges Material, wie beispielsweise eine Platte aus Polyurethanschaum, zwischen zwei Metallplatten eingebracht und mit diesen verbunden, also vorzugsweise verklebt, wird. Alternativ dazu kann aber auch zwischen zwei beabstandete Metallplatten ein schäumbares Material eingebracht werden, das zwischen den Metallplatten ausschäumt und so den Raum zwischen den Metallplatten füllt, wobei in diesem Fall vorzugsweise ein Härtungsschritt des geschäumten Materials vorgesehen ist.

Die im Rahmen des erfindungsgemäßen Energiespeichermoduls beschriebenen vorteilhaften Ausgestaltungen finden entsprechend vorteilhafte Anwendung im Rahmen des erfindungsgemäßen Verfahrens zur Herstellung der Endplatten für das Energiespeichermodul.

Mittels des erfindungsgemäßen Verfahrens ist auf einfache und kostengünstige Weise, ohne hohen technischen oder logistischen Aufwand eine Endplatte für ein Energiespeichermodul herstellbar. Die Endplatte zeichnet sich gegenüber herkömmlichen Strangpressprofilen durch ein reduziertes Eigengewicht auf, so dass sich dieses Verfahren besonders zur Herstellung von Endplatten für Energiespeichermodule für Kraftfahrzeuge in Leichtbauweise eignet. Aufgrund der einfachen, gut automatisierbaren und somit kostengünstigen Verfahrensführung sind auch die Kosten für das erfindungsgemäße Energiespeichermodul niedrig.

Darüber hinaus ist erfindungsgemäß ein Verfahren zur Herstellung eines Energiespeichermoduls für eine Vorrichtung zur Spannungsversorgung, insbesondere eines Kraftfahrzeugs, umfassend mehrere, insbesondere prismatische Speicherzellen, die zu mindestens in einer Reihe gestapelt, hintereinander angeordnet sind, vorgesehen, das die Schritte des Bereitstellens von mindestens zwei Endplatten, wobei mindestens eine Endplatte eine erfindungsgemäße, wie eingangs beschriebene Schichtstruktur aus mindestens drei aufeinander folgenden Schichten aufweist, wobei zwei äußeren Schichten eine innere Schicht umgeben und wobei die innere Schicht eine wellenartige oder diffuse Struktur aufweist, ggf. das Vorsehen von Befestigungselementen und/oder Bodenbefestigungselementen an mindestens einer Endplatte, das Anbringen mindestens jeweils einer Endplatte an der jeweiligen Stirnseite der endständigen Speicherzellen der in Reihe gestapelten, insbesondere prismatischen Speicherzellen und das Verspannen der Endplatten über mindestens einen Zuganker, vorsieht. Die Schichtstruktur besteht dabei aus einem Faserverbundmaterial, das Fasern und eine polymere Matrix umfasst, wobei die innere Schicht eine durch Ziehen des Faserverbundwerkstoffes erzeugte diffuse und/oder wellenartige Struktur aufweist, die von zwei äußeren Schichten, bestehend aus ungezogenem Material, umgeben ist.

Vorteilhafterweise ist mindestens eine der Endplatten durch das erfindungsgemäße Verfahren hergestellt.

Die im Rahmen des erfindungsgemäßen Energiespeichermoduls beschriebenen vorteilhaften Ausgestaltungen finden entsprechend vorteilhafte Anwendung im Rahmen des erfindungsgemäßen Verfahrens zur Herstellung des Energiespeichermoduls.

Somit wird ein Verfahren zur Herstellung eines Energiespeichermoduls bereitgestellt, das einfach umzusetzen und variabel in seiner Anwendung ist. Das erfindungsgemäße Verfahren erfordert lediglich einen geringen fertigungstechnischen Aufwand und trägt damit zur Senkung der Herstellkosten des Energiespeichermoduls und damit der Gesamtkosten desselben, bei. Das erfindungsgemäße Energiespeichermodul weist neben einer hohen Qualität, mechanischen, chemischen und physikalischen Stabilität und effizienten Wirkungsweise, ein geringeres Eigengewicht als Strangpressprofile umfassende Energiespeichermodule auf, wodurch das Gesamtgewicht eines Kraftfahrzeugs, das das erfindungsgemäße Energiespeichermodul enthält, reduziert wird, so dass es sich insbesondere für Kraftfahrzeuge in der Leichtbauweise eignet. Aufgrund der reduzierten Fertigungskosten sind auch die Kosten für das Energiespeichermodul niedrig.

Die Erfindung wird nachfolgend anhand der Zeichnung näher erläutert. Dabei zeigt:
- Figur 1: eine Seitenansicht einer Endplatte eines Energiespeichermoduls
- Figur 2: eine Seitenansicht einer Endplatte eines Energiespeichermoduls
- Figur 3: eine Seitenansicht einer Endplatte eines Energiespeichermoduls
- Figur 4: eine Seitenansicht einer Endplatte des erfindungsgemäßen Energiespeichermoduls gemäß einer Ausführungsform der Erfindung und
- Figur 5: eine Seitenansicht einer Endplatte eines Energiespeichermoduls.

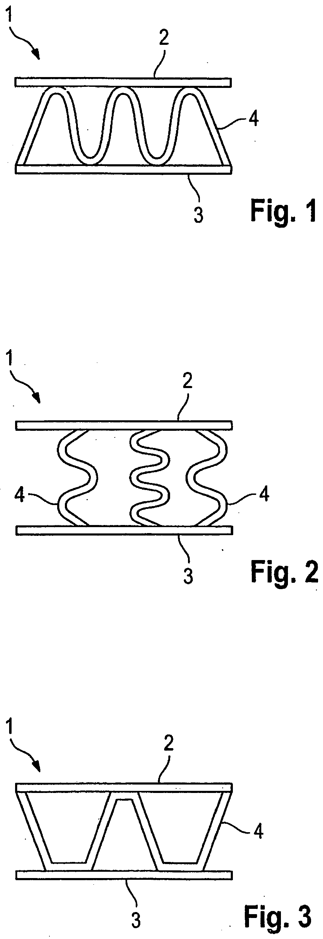

Im Folgenden wird die Erfindung anhand der Figuren näher erläutert. Figuren 1 bis 3 und 5 dienen als Referenz, sind jedoch nicht Teil der vorliegenden Erfindung.

In Figur 1 ist eine Endplatte 1 für ein Energiespeichermodul gezeigt, die eine Drei-Schicht-Struktur aufweist. Die Drei-Schicht-Struktur umfasst zwei äußere Schichten 2, 3 und eine innere Schicht 4, wobei die innere Schicht 4 eine regelmäßige, gleichförmige Wellenstruktur mit konstanter Amplitude aufweist. Diese innere Schicht 4 ist so angeordnet, dass sie mit ihrem Wellenverlauf parallel zu den Flächen der äußeren Schichten 2, 3, angeordnet ist. Die Schichten 2, 3, 4 bestehen aus Metallblechen bzw. Metallplatten, wobei die innere Schicht 4 durch Biegen einer solchen Metallplatte zu einer Wellenstruktur geformt wurde. Die jeweiligen Schichten 2, 3, 4 sind durch Klebeverbindungen (sind nicht gezeigt) miteinander verbunden. Hierdurch ergibt sich eine Endplatte 1 mit stabiler Struktur, die bestens geeignet ist, Verformungen aufgrund von Druckänderungen im Inneren der Speicherzellen eines Energiespeichermoduls, entgegenzuwirken.

In Figur 2 ist eine Endplatte 1 für ein Energiespeichermodul gezeigt, die ebenfalls eine Drei-Schicht-Struktur aufweist. Die Drei-Schicht-Struktur umfasst wiederum zwei äußere Schichten 2, 3 und drei innere Schicht 4, wobei die inneren Schichten 4 eine regelmäßige, gleichförmige Wellenstruktur mit konstanter Amplitude aufweisen. Diese inneren Schichten 4 sind so angeordnet, dass sie mit ihrem Wellenverlauf orthogonal zu den Flächen der äußeren Schichten 2, 3, stehen. Der Vollständigkeit halber sei angeführt, dass die Anzahl der inneren Schichten 4 nicht beschränkt ist und je nach Anforderung eine gewisse Anzahl an Schichten umfassen kann. Die Schichten 2, 3, 4 bestehen aus Metallblechen bzw. Metallplatten, wobei die inneren Schichten 4 durch Biegen einer solchen Metallplatte zu einer Wellenstruktur geformt wurden. Die jeweiligen Schichten 2, 3, 4 sind durch Klebeverbindungen (sind nicht gezeigt) miteinander verbunden. Hierdurch ergibt sich eine Endplatte 1 mit stabiler Struktur, die bestens geeignet ist, Verformungen aufgrund von Druckänderungen im Inneren der Speicherzellen eines Energiespeichermoduls, entgegenzuwirken.

In Figur 3 ist eine Endplatte 1 für ein Energiespeichermodul gezeigt, die eine Drei-Schicht-Struktur aufweist. Die Drei-Schicht-Struktur umfasst zwei äußere Schichten 2, 3 und eine innere Schicht 4, wobei die innere Schicht 4 eine wellenartige Struktur von aneinandergereihten, trapezartigen Gebilden, aufweist: Diese innere Schicht 4 ist so angeordnet, dass sie mit ihrem Wellenverlauf parallel zu den Flächen der äußeren Schichten 2, 3, angeordnet ist. Die Schichten 2, 3, 4 bestehen wiederum aus Metallblechen bzw. Metallplatten, wobei die innere Schicht 4 durch Prägen einer solchen Metallplatte zu einer Wellenstruktur von aneinandergereihten, trapezartigen Gebilden geformt wurde. Die jeweiligen Schichten 2, 3, 4 sind durch Klebeverbindungen (sind nicht gezeigt) miteinander verbunden. Hierdurch ergibt sich eine Endplatte 1 mit stabiler Struktur, die bestens geeignet ist, Verformungen aufgrund von Druckänderungen im Inneren der Speicherzellen eines Energiespeichermoduls, entgegenzuwirken.

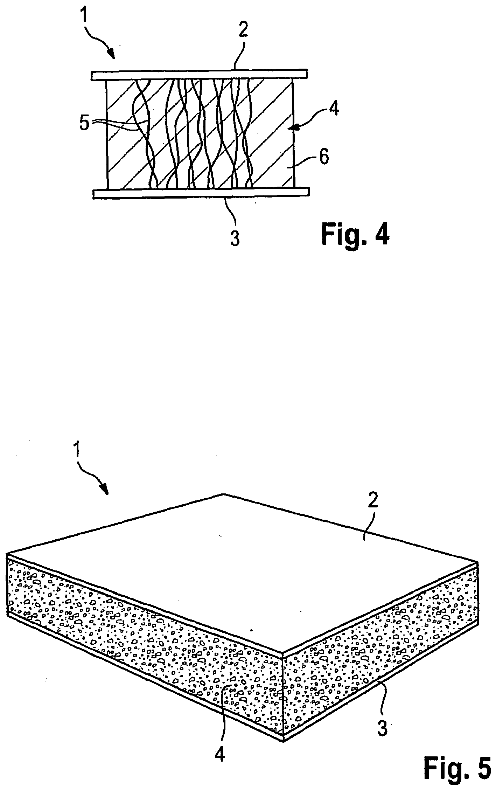

In Figur 4 ist eine Endplatte 1 für ein Energiespeichermodul gemäß einer Ausführungsform der Erfindung gezeigt, die eine Drei-Schicht-Struktur aufweist. Die Drei-Schicht-Struktur umfasst zwei äußere Schichten 2, 3 und eine innere Schicht 4, wobei die innere Schicht 4 eine diffuse und/oder wellenartige Struktur aufweist. Diese Drei-Schicht-Struktur wurde erhalten durch Anlegen von Vakuum an die Oberseite und Unterseite eines Fasergewebes, wodurch sich das Fasergewebe in zwei äußere Deckschichten 2, 3 und eine innere Schicht 4 unterteilte, wobei die innere Schicht 4 aus Faserstegen 5 gebildet ist, die die beiden Deckschichten 2, 3 miteinander verbinden. Zwischen die Faserstege 5 ist ein Matrixmaterial 6 zur Stabilisierung und Fixierung der Faserstruktur eingebracht, wobei das Matrixmaterial 6 vorzugsweise ein Duromer, wie ein Epoxidharz, ist. Das Matrixmaterial 6 wird zur Vervollständigung der Endplatte per Licht gehärtet. Auch hierdurch ergibt sich eine Endplatte 1 mit stabiler Struktur, die bestens geeignet ist, Verformungen aufgrund von Druckänderungen im Inneren der Speicherzellen eines Energiespeichermoduls, entgegenzuwirken.

In Figur 5 ist eine Endplatte 1 für ein Energiespeichermodul gezeigt, die ebenfalls eine Drei-Schicht-Struktur aufweist. Die Drei-Schicht-Struktur umfasst zwei äußere Schichten 2, 3 und eine innere Schicht 4, wobei die innere Schicht 4 eine diffuse und/oder wellenartige Struktur aufweist. Die jeweiligen äußeren Schichten 2, 3 sind aus Metallblechen und insbesondere aus Aluminiumblechen gebildet.

Die innere Schicht 4 ist aus einer Aluminiumschaumplatte gebildet, die aus einer Aluminiumlegierung besteht, die mit einem geeigneten Treibmittel, beispielsweise mit Titanhydrid (TiH), geschäumt wurde. Die Aluminiumschaumplatte ist aufgrund der enthaltenen Poren bzw. Hohlräume bestens geeignet, Verformungen aufgrund von Druckänderungen im Inneren der Speicherzellen eines Energiespeichermoduls, entgegenzuwirken, also beispielsweise Verformungsenergien, wie sie bei einem Fahrzeugcräsh auftreten, aufzunehmen und abzuleiten. Diese Drei-Schicht-Struktur zeichnet sich insbesondere durch die Verwendung einer Aluminiumschaumplatte als innere Schicht 4, sowie auch vorteilhafterweise durch die Verwendung von Aluminiumblechen als jeweilige äußere Schicht 2, 3, durch ein geringes Eigengewicht aus, was insbesondere vorteilhaft für den Einsatz in Kraftfahrzeugen in Leichtbauweise, ist.

### Bezugszeichenliste

- 1: Endplatte
- 2: äußere Schicht der Endplatte
- 3: äußere Schicht der Endplatte
- 4: innere Schicht der Endplatte
- 5: Faserstege
- 6: Matrixmaterial

## Patentansprüche

1. Energiespeichermodul für eine Vorrichtung zur Spannungsversorgung für Kraftfahrzeuge umfassend mehrere Speicherzellen, die mindestens in einer Reihe gestapelt, hintereinander angeordnet und zwischen mindestens zwei Endplatten (1) über mindestens ein Zugelement verspannt sind, wobei
das mindestens eine Zugelement die mindestens zwei Endplatten miteinander verbindet,
wobei zumindest eine der Endplatten (1) eine Schichtstruktur aus mindestens drei aufeinander folgenden Schichten (2, 3, 4) aufweist, wobei zwei äußere Schichten (2, 3) mindestens eine innere Schicht (4) umgeben und wobei die innere Schicht (4) eine wellenartige und/oder diffuse Struktur aufweist, wobei die diffuse Struktur unregelmäßig geformte Bereiche aufweist,
**dadurch gekennzeichnet, dass**
die Schichtstruktur aus einem Faserverbundmaterial besteht, umfassend Fasern und eine polymere Matrix, wobei die innere Schicht (4) eine durch Ziehen des Faserverbundwerkstoffes erzeugte diffuse und/oder wellenartige Struktur aufweist, die von zwei äußeren Schichten (2, 3), bestehend aus ungezogenem Material, umgeben ist.

2. Energiespeichermodul nach Anspruch 1, **dadurch gekennzeichnet, dass** die Fasern ausgewählt sind aus Glasfasern, Kohlefasern, Mineralfasern, Pflanzenfasern, Keramikfasern, Stahlfasern oder Kunststofffasern.

3. Energiespeichermodul nach Anspruch 1 oder 2, **dadurch gekennzeichnet, dass** die Fasern in Form eines Gewebes, eines Gewirkes oder eines Gestrickes vorliegen.

4. Verfahren zur Herstellung einer Endplatte (1) für ein Energiespeichermodul nach einem der Ansprüche 1 bis 3, wobei die Endplatte (1) eine Schichtstruktur aus mindestens drei aufeinander folgenden Schichten (2, 3, 4) aufweist, wobei zwei äußere Schichten (2, 3) mindestens eine innere Schicht (4) umgeben und wobei die innere Schicht (4) eine wellenartige und/oder diffuse Struktur aufweist, umfassend die Schritte
- Bereitstellen eines textilen Halbzeugs,
- Einbringen einer polymeren Matrix (6) in das textile Halbzeug,
- Anlegen von Vakuum an beide Flächenseiten des textilen Halbzeugs,
- In Form Ziehen des textilen Halbzeugs,
- ggf. Härten der Endplatte (1).

5. Verfahren zur Herstellung eines Energiespeichermoduls nach einem der Ansprüche 1 bis 3 für eine Vorrichtung zur Spannungsversorgung, insbesondere eines Kraftfahrzeugs, umfassend mehrere, insbesondere prismatische Speicherzellen, die zu mindestens in einer Reihe gestapelt, hintereinander angeordnet sind, **gekennzeichnet durch** die folgenden Schritte:
- Bereitstellen von mindestens zwei Endplatten (1), wobei mindestens eine Endplatte (1) eine Schichtstruktur aus mindestens drei aufeinander folgenden Schichten (2, 3, 4) aufweist, wobei zwei äußere Schichten (2, 3) eine innere Schicht (4) umgeben und wobei die innere Schicht (4) eine wellenartige oder diffuse Struktur aufweist, wobei die diffuse Struktur unregelmäßig geformte Bereiche aufweist, wobei die Schichtstruktur aus einem Faserverbundmaterial besteht, umfassend Fasern und ein polymere Matrix, wobei die innere Schicht (4) eine **durch** Ziehen des Faserverbundwerkstoffes erzeugte diffuse und/oder wellenartige Struktur aufweist, die von zwei äußeren Schichten (2, 3), bestehend aus ungezogenem Material, umgeben ist,
- ggf. Vorsehen von Befestigungselementen und/oder Bodenbefestigungselementen an mindestens einer Endplatte (1) und oder einem Zuganker,
- Anbringen mindestens jeweils einer Endplatte (1) an der jeweiligen Stirnseite der endständigen Speicherzellen der in Reihe gestapelten, insbesondere prismatischen Speicherzellen und
- Verspannen der Endplatten (1) über mindestens ein Zugelement und insbesondere über mindestens einen Zuganker.

6. Verfahren nach Anspruch 5, wobei mindestens eine der Endplatten (1) durch das Verfahren nach Anspruch 4 hergestellt wurde.

7. Verfahren nach Anspruch 4, **dadurch gekennzeichnet, dass** es sich bei dem textilen Halbzeug um ein Fasergewebe oder um ein Fasergewirk oder um ein Fasergestrick handelt.

8. Verfahren nach Anspruch 4 oder 7, **dadurch gekennzeichnet, dass** das textile Halbzeug Glasfasern enthält.

9. Verfahren nach einem der Ansprüche 4, 7 oder 8, **dadurch gekennzeichnet, dass** es sich bei der polymeren Matrix um eine thermoplastische oder duromere Matrix (6) handelt.

## Claims

1. An energy storage module for a device for the power supply of vehicles comprising a plurality of storage cells which are stacked in at least one row, are arranged one behind another and are braced between at least two end plates (1) by at least one tension element, wherein
the at least one tension element joins the at least two end plates together, wherein at least one of the end plates (1) has a layer structure of at least three successive layers (2, 3, 4), wherein two outer layers (2, 3) surround at least one inner layer (4) and wherein the inner layer (4) has an undulating and/or diffuse structure, wherein the diffuse structure has irregularly formed regions,
**characterised in that**
the layer structure consists of a fibre composite material, comprising fibres and a polymeric matrix, the inner layer (4) having a diffuse and/or undulating structure which is created by pulling the fibre composite material and is surrounded by two outer layers (2, 3) comprising unpulled material.

2. An energy storage module according to claim 1, **characterised in that** the fibres are selected from glass fibres, carbon fibres, mineral fibres, plant fibres, ceramic fibres, steel fibres or plastics material fibres.

3. An energy storage module according to claim 1 or claim 2, **characterised in that** the fibres are present in the form of a woven fabric, an interlaced fabric or a knitted fabric.

4. A method for producing an end plate (1) for an energy storage module according to any one of claims 1 to 3, wherein the end plate (1) has a layer structure comprising at least three successive layers (2, 3, 4), wherein two outer layers (2, 3) surround at least one inner layer (4) and wherein the inner layer (4) has an undulating and/or diffuse structure, comprising the steps:
- providing a semi-finished textile product,
- introducing a polymeric matrix (6) into the semi-finished textile product,
- applying vacuum to both flat sides of the semi-finished textile product,
- pulling the semi-finished textile product into shape,
- optionally hardening the end plate (1).

5. A method for producing an energy storage module according to any one of claims 1 to 3 for a power supply device, especially of a vehicle, comprising a plurality of especially prismatic storage cells which, stacked in at least one row, are arranged one behind another, **characterised by** the following steps:
- providing at least two end plates (1), wherein at least one end plate (1) has a layer structure comprising at least three successive layers (2, 3, 4), wherein two outer layers (2, 3) surround an inner layer (4) and wherein the inner layer (4) has an undulating or diffuse structure, wherein the diffuse structure has irregularly formed regions, wherein the layer structure comprises a fibre composite material, comprising fibres and a polymeric matrix, wherein the inner layer (4) has a diffuse and/or undulating structure which is created by pulling the fibre composite material and is surrounded by two outer layers (2, 3) comprising unpulled material,
- optionally providing fastening elements and/or base fastening elements on at least one end plate (1) and/or on a tie rod,
- attaching at least respectively one end plate (1) to the respective end face of the end-positioned storage cells of the especially prismatic storage cells which are stacked in a row, and
- bracing the end plates (1) by at least one tension element and especially by at least one tie rod.

6. A method according to claim 5, wherein at least one of the end plates (1) is produced by the method according to claim 4.

7. A method according to claim 4, **characterised in that** the semi-finished textile product is a fibre woven fabric or a fibre interlaced fabric or a fibre knitted fabric.

8. A method according to claim 4 or claim 7, **characterised in that** the semi-finished textile product contains glass fibres.

9. A method according to any one of claims 4, 7 or 8, **characterised in that** the polymeric matrix is a thermoplastic or duromeric matrix (6).

## Revendications

1. Module accumulateur d'énergie destiné à un dispositif d'alimentation en tension de véhicules comprenant plusieurs cellules d'accumulation qui sont installées les unes derrière les autres en étant empilées selon au moins une rangée et sont serrées entre au moins deux plaques d'extrémité (1) par l'intermédiaire d'au moins un élément de traction, cet élément de traction reliant entre elles les deux plaques d'extrémité,
au moins l'une des plaques d'extrémité (1) ayant une structure stratifiée constituée d'au moins trois couches successives (2, 3, 4), deux couches externes (2, 3) entourant au moins une couche interne (4) et la couche interne (4) ayant une structure ondulée et/ou irrégulière, la structure irrégulière comprenant des zones formées irrégulièrement,
**caractérisé en ce que**
la structure stratifiée est constituée d'un matériau composite renforcé par des fibres renfermant des fibres et une matrice polymère, la couche interne (4) ayant une structure irrégulière et/ou ondulée obtenue par étirement du matériau composite renforcé par des fibres qui est entourée par deux couches externes (2, 3) réalisées en un matériau non étiré.

2. Module accumulateur d'énergie conforme à la revendication 1, **caractérisé en ce que**
les fibres sont choisies parmi les fibres de verre, les fibres de carbone, les fibres minérales, les fibres végétales, les fibres céramiques, les fibres d'acier et les fibres en matériau synthétique.

3. Module accumulateur d'énergie conforme à la revendication 1 ou 2, **caractérisé en ce que**
les fibres se présentent sous la forme d'une étoffe, d'un tissu ou d'un tricot.

4. Procédé d'obtention d'une plaque de base (1) destinée à un module accumulateur d'énergie, conforme à l'une des revendications 1 à 3, selon lequel la plaque d'extrémité (1) a une structure stratifiée constituée par au moins trois couches successives (2, 3, 4), deux couches externes (2, 3) entourant au moins une couche interne (4) et la couche interne (4) ayant une structure ondulée et/ou irrégulière, ce procédé comprenant des étapes consistant à :
- se procurer une pièce textile semi-finie,
- introduire une matrice polymère (6) dans le produit textile semi-fini,
- appliquer un vide sur les deux faces du produit textile semi-fini,
- étendre en forme le produit textile semi-fini,
- et le cas échéant durcir la plaque d'extrémité (1).

5. Procédé d'obtention d'un module accumulateur d'énergie conforme à l'une des revendications 1 à 3, destiné à un dispositif d'alimentation en tension, en particulier d'un véhicule, comportant plusieurs cellules d'accumulation en particulier prismatiques qui sont installées les unes derrière les autres en étant empilées selon au moins une rangée, **caractérisé en ce qu'**
il comprend les étapes suivantes consistant à :
- se procurer au moins deux plaques d'extrémité (1), au moins une plaque d'extrémité (1) ayant une structure stratifiée constituée par au moins trois couches successives (2, 3, 4), deux couches externes (2, 3) entourant une couche interne (4) et la couche interne (4) ayant une structure ondulée ou irrégulière, cette structure irrégulière comprenant des zones de forme irrégulière, la structure stratifiée étant constituée d'un matériau composite renforcé par des fibres renfermant des fibres et une matrice polymère, la couche interne (4) ayant une structure irrégulière et/ou ondulée obtenue par étirement du matériau composite renforcé par des fibres qui est entourée par deux couches externes (2, 3) réalisées en un matériau non étiré,
- le cas échéant prévoir des éléments de fixation et/ou des éléments de fixation au plancher sur au moins une plaque d'extrémité (1) ou un tirant d'ancrage,
- appliquer au moins une plaque d'extrémité respective (1) sur chacune des faces frontales des cellules d'accumulation terminales, des cellules d'accumulation, en particulier, des cellules d'accumulation prismatiques qui sont empilées en rangée,
- serrer les plaques d'extrémité (1) par l'intermédiaire d'au moins un élément de traction et en particulier par l'intermédiaire d'au moins un tirant d'ancrage.

6. Procédé conforme à la revendication 5,
selon lequel au moins l'une des plaques d'extrémité (1) a été obtenue par la mise en oeuvre du procédé conforme à la revendication 4.

7. Procédé conforme à la revendication 4,
**caractérisé en ce que**
le produit textile semi-fini est une étoffe de fibres ou un tissu de fibres ou un tricot de fibres.

8. Procédé conforme à la revendication 4 ou 7,
**caractérisé en ce que**
le produit textile semi-fini renferme des fibres de verre.

9. Procédé conforme à l'une des revendications 4, 7 ou 8,
**caractérisé en ce que**
la matrice polymère est une matrice thermoplastique ou une matrice thermodurcissable (6).
